# EUROPÄISCHE PATENTSCHRIFT

(11) **EP 0 951 992 B1**
(45) Veröffentlichungstag und Bekanntmachung des Hinweises auf die Patenterteilung: **26.05.2004**
(21) Anmeldenummer: 99106424.7
(22) Anmeldetag: 29.03.1999
(51) Int. Cl.: B32B 31/12, B65H 23/00

(54) **Sichtkaschiervorrichtung**
Laminating apparatus
Dispositif d'application d'un revêtement

(30) Priorität: 22.04.1998 DE 19817835
(43) Veröffentlichungstag der Anmeldung: 27.10.1999
(73) Patentinhaber: Billhöfer Maschinenfabrik GmbH & Co. KG, 90449 Nürnberg (DE)
(72) Erfinder: Bartsch, Peter, 90559 Burgthann-Unterferrieden (DE)
(74) Vertreter: Matschkur, Lindner Blaumeier Patent- und Rechtsanwälte

(56) Entgegenhaltungen:
- EP-A- 0 235 790
- EP-A- 0 782 918
- GB-A- 2 158 771

## Beschreibung

Die Erfindung bezieht sich auf eine Sichtkaschiervorrichtung, bei der zum Zwecke der Oberflächenveredelung von Druck- und anderen Erzeugnissen, insbesondere von Bogen, mittels einer beheizten Kaschierwalze eine von einer Vorratswalze abgezogene Kaschierfolie mit ihrer kleberbeschichteten Seite auf das Erzeugnis aufkaschiert wird.

Die Folien werden der eigentlichen Kaschiermaschine mit der Kaschierwalze über eine sog. Abwicklung zugeführt. Diese Abwicklung ist mit einer einstellbaren Bremse versehen, um der Folie die ggf. für den Klebstoffauftrag, den Trocknungsvorgang oder die Folienfixierung notwendige Zugspannung für einen faltenfreien Folienlauf zu geben. Bei den meist thermisch empfindlichen Folien (PP, PE, PS, Nylon od. dgl.) ergibt sich zwischen der Folienabwicklung und der Kaschierwalze eine Folienstreckung, mit welcher die Folie auf das Erzeugnis aufkaschiert wird. Die Erzeugung bzw. Regelung der notwendigen bzw. richtigen Spannung der Folienbahn auf der Strecke innerhalb einer Kaschiermaschine, und zwar zwischen der abbremsbaren Folienabwicklung und der die Folienbahn abziehenden Kaschierwalze, erfolgt überwiegend durch regelbare Antriebe, Bremsen, verstellbare Walzen oder ähnliches, so wie es auch in der EP-A-0 235 790 beschrieben ist. im Ergebnis zeigt das Endprodukt (Kaschierverbund) sofort nach Verlassen des Kaschierwerks eine starke Rollneigung, d.h. es weist eine mangelhafte Planlage auf, was für die Weiterverarbeitung der Verbunde, insb. im Falle kaschierter Bogen, sehr negativ ist.

Der Erfindung liegt daher die Aufgabe zugrunde, eine Sichtkaschiervorrichtung der eingangs genannten Art so auszugestalten, dass die vorstehend beschriebenen Schwierigkeiten mit aufkaschierter Kaschierfolie mit Folienstreckung nicht mehr auftreten.

Zur Lösung dieser Aufgabe ist erfindungsgemäß vorgesehen, dass unmittelbar vor der Kaschierwalze eine Folienentspannvorrichtung aus einer von der Kaschierfolie von oben teilweise umschlungenen Gegendruckwalze und einer Releasewalze angeordnet ist, und dass die mit ihrer Kleberschicht an der Releasewalze anhaftende, sie von unten teilweise umschlingende Kaschierfolie sich an einem vorgebbaren Ablaufpunkt zwischen der Unter- und der Oberkante, vorzugsweise im Bereich der 15-Uhr-Linie, von der Releasewalze ablöst und spannungsfrei auf die im wesentlichen synchron angetriebene Kaschierwalze aufläuft.

Durch die erfindungsgemäße Anordnung kann die sich im Ablaufpunkt frei ablösende Kaschierfolie jegliche etwa vorher über die Abwicklung und die Bremse eingebrachte Folienstreckung wieder rückgängig machen, so dass sie ohne eine solche Folienstreckung spannungsfrei auf die Kaschierwalze aufläuft und demzufolge auch ebenso spannungsfrei auf das zu beschichtende Erzeugnis, vorzugsweise einen zu beschichtenden Bogen, aufkaschiert werden kann. Damit lassen sich die eingangs beschriebenen Schwierigkeiten mit einer häufig starken Rollneigung der kaschierten Bögen sicher vermeiden.

In Ausgestaltung der Erfindung kann dabei vorgesehen sein, dass die Releasewalze eine heiz- und/oder kühlbare Kalanderwalze mit einer auf die Kleberschicht der Kaschierfolie abgestimmten Oberflächenbehandlung bzw. Oberflächenbeschichtung ist. Je nachdem, ob eine im Werk bereits mit einer Kleberschicht versehene Kaschierfolie verwendet wird oder die Kleberschicht erst in der eigentlichen Kaschiervorrichtung aufgebracht wird und in letzterem Fall auch noch in Abhängigkeit davon, welche Art von Kleber verarbeitet wird, ist die Haftung der trockenen oder nur vorgetrockneten oder ggf. auch noch feuchten Kleberschicht an der Releasewalze unterschiedlich und die Releasewalze muss demzufolge entsprechend abstimmbar sein, um einen gewünschten freien Ablaufpunkt im Bereich der 15-Uhr-Linie zu erreichen. Die Abstimmung erfordert dabei eine entsprechende Oberflächenausbildung der Releasewalze und ggf. auch eine entsprechend erhöhte oder auch verringerte Temperatur je nach Art des verwendeten Klebers.

In weiterer Ausgestaltung der Erfindung kann dabei auch vorgesehen sein, dass die Releasewalze mit einer regelbaren Antriebsvorrichtung versehen ist, der ein die ablaufende Folie überwachender Sensor zugeordnet ist, um durch kurzzeitiges Nachregeln der Geschwindigkeit der normalerweise mit der Kaschierwalze synchronisierten Releasewalze den gewünschten Ablaufpunkt zu erreichen.

Ganz besonders eignet sich die erfindungsgemäße Kaschiervorrichtung für Sichtkaschierungen mit einem 100%-Klebstoffsystem, wobei am Beginn des Einlaufspalts zwischen der Gegendruckwalze und der Releasewalze auf die über die Gegendruckwalze geführte Kaschierfolie mittels einer geheizten Breitschlitzdüse ein thermoplastischer Klebstoff aufgebracht wird.

Mit besonderem Vorteil kann in diesem Zusammenhang vorgesehen sein, dass die Breitschlitzdüse die Folie im Ablaufradius auf der vorzugsweise gummierten Gegendruckwalze tangiert oder in Abstand von 0 bis 100 mm den aus der Breitschlitzdüse austretenden Klebstoffilm auf die gummierte Gegendruckwalze oder in den Spalt zwischen dieser und der Releasewalze auf- bzw. einfließen lässt (aufextrudiert).

Weitere Vorteile, Merkmale und Einzelheiten der Erfindung ergeben sich aus der nachfolgenden Beschreibung eines Ausführungsbeispiels sowie anhand der schematischen Zeichnung, die einen Schnitt durch eine erfindungsgemäße Sichtkaschiervorrichtung zeigt.

In der Folienabwicklung wird die Vorratsrolle 1 so einghängt, dass die vorbehandelte Folienseite (herstellerseitige Vorbehandlung) bei der Beschichtung zur Auftragseinrichtung hinzeigt. Der Folienabzug wird mittels einer Bremse konstantgehalten. Bei 2 und 3 sind Folienleitwalzen angedeutet, wobei die Schrägstellung der Folienleitwalze 2 bevorzugt an der Bedienseite der Maschine und die Schrägstellung der Folienleitwalze 3 an der gegenüberliegenden Maschinenseite erfolgt.

Mittels entsprechender Leitwalzeneinstellung können Wickelfehler der Folienrolle (konkav-, konvex- oder einseitig schräggewickelt) ausgeglichen oder die Folienbahn auf ihrer gesamten Breite bei gleichen Spannungsverhältnissen der Maschine zugeführt werden. Über die Folienleitwalze 4 gelangt die abgezogene Kaschierfolie zur Breitstreckwalze 5, die ein faltenfreies Auflaufen der Folienbahn F auf den Abzugskalander sicherstellt.

Der Abzugskalander besteht aus der Abzugswalze 6 und der vorzugsweise gummierten Gegendruckwalze 7, die an- und abstellbar sind und. deren Anpreßkraft variierbar ist.

Im dargestellten Ausführungsbeispiel wird der Klebstoff durch eine Breitschlitzdüse 9 auf die Folie im Eingangsbereich des Einlaufspalts zwischen der Gegendruckwalze 7 und einer Releasewalze 10 aufgebracht, wobei die Releasewalze 10 und die vorzugsweise gummierte Gegendruckwalze 7 eine Folienentspanneinrichtung bilden. Anstelle der angedeuteten Kleberbeschichtung, bei der über die Breitschlitzdüse 9 ein thermoplastischer Kleber auf die die Gegendruckwalze 7 oben umschlingende Kaschierfolie aufextrudiert wird, könnte auch eine Ausführung vorgesehen sein, bei der die Breitschlitzdüse die Folie tangiert.

Die Releasewalze 10, an der die mit der Klebstoffschicht versehene Seite der Kaschierfolie F anliegt, ist je nach dem verwendeten Kleber heiz- oder kühlbar und darüber hinaus mit einer entsprechend behandelten oder beschichteten Oberfläche versehen, so dass sich die Folie F, die die Releasewalze 10 von unten umschlingt, an einem vorgebbaren Ablaufpunkt 11, vorzugsweise im Bereich der 15-Uhr-Linie, von der Releasewalze 10 ablöst und von dort aus dann spannungsfrei auf die im wesentlichen synchron angetriebene Kaschierwalze 12 aufläuft. Durch dieses Ablösen der mit Kleber beschichteten Kaschierfolie F ist eine etwaige im Bereich zwischen der Vorratsrolle 1 und der Gegendruckwalze 7 vorhandene Spannung in der Folie aufgehoben bzw. die Folie kann eine vorhandene Streckung selbsttätig wieder rückgängig machen, so dass die Folie F ohne eine solche Streckung auf die Kaschierwalze 12 aufläuft. Demzufolge wird sie dann auch spannungsfrei auf die in Richtung des Pfeils 14 ankommenden Erzeugnisse, insbesondere Druckbögen, mit Hilfe der Gegendruckwalze 13 aufkaschiert, so dass die bei 15 auslaufenden Bögen keine Rollneigung mehr zeigen.

Bei 16 ist ein Sensor angedeutet, der die Höhenlage der Folie F und damit deren Ablaufpunkt 11 von der Releasewalze 10 überwacht. Die beiden gestrichelt eingezeichneten Linien 17 und 18 stellen die untere und obere Grenzlinie dar, innerhalb deren die Ablösung von der Releasewalze erfolgen sollte. Wenn beispielsweise durch einen erhöhten Kleberauftrag die mit ihrer Klebschicht an der Releasewalze 10 haftende Kaschierfolie F zu weit mit nach oben läuft, also in Richtung auf die Höhenposition 18, wird die Geschwindigkeit der Antriebsvorrichtung der Releasewalze 10 geringfügig abgesenkt, so dass der gewünschte Ablaufpunkt im Bereich der 15-Uhr-Linie, oder einer anderen vorgegebenen Postion, erreicht wird. Diese kurzzeitige Geschwindigkeitsnachregelung der Releasewalze 10 muss jedoch in jedem Fall so abgestimmt sein, dass die notwendige Synchronität mit der Umlaufgeschwindigkeit der Kaschierwalze 12 gewährleistet ist und nach wie vor der spannungsfreie Auflauf der Folie F von der Releasewalze auf diese Kaschierwalze 12 sichergestellt ist.

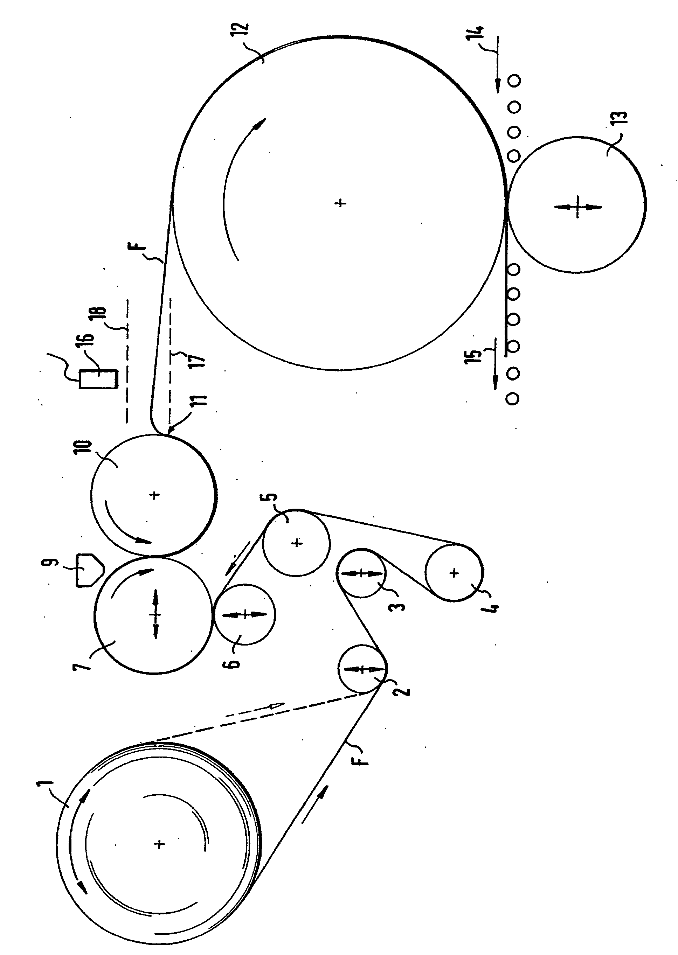

## Patentansprüche

1. Sichtkaschiervorrichtung, bei der zum Zwecke der Oberflächenveredelung von Druck- und anderen Erzeugnissen, insbesondere von Bogen, mittels einer vorzugsweise beheizten Kaschierwalze (12) eine von einer Vorratswalze (1) abgezogene Kaschierfolie (F) mit ihrer kleberbeschichteten Seite auf das Erzeugnis aufkaschiert wird, **dadurch gekennzeichnet, dass** unmittelbar vor der Kaschierwalze (12) eine Folienentspannvorrichtung aus einer von der Kaschierfolie (F) von oben teilweise umschlungenen Gegendruckwalze (7) und einer Releasewalze (10) angeordnet ist, und dass die mit ihrer Kleberschicht an der Releasewalze (10) anhaftende, sie von unten teilweise umschlingende Kaschierfolie (F) sich an einem vorgebbaren Ablaufpunkt (11) zwischen der Unter- und der Oberkante, vorzugsweise im Bereich der 15-Uhr-Linie, von der Releasewalze ablöst und spannungsfrei auf die im wesentlichen synchron angetriebene Kaschierwalze (12) aufläuft.

2. Sichtkaschiervorrichtung nach Anspruch 1, **dadurch gekennzeichnet, dass** die Releasewalze (10) eine heiz- und/oder kühlbare Kalanderwalze mit einer auf die Kleberschicht der Kaschierfolie (F) abgestimmten Oberflächenbehandlung bzw. Oberflächenbeschichtung ist.

3. Sichtkaschiervorrichtung nach Anspruch 1 oder 2, **dadurch gekennzeichnet, dass** die Releasewalze (10) mit einer regelbaren Antriebsvorrichtung versehen ist, der ein die ablaufende Folie (F) überwachender Sensor (16) zugeordnet ist, um durch kurzzeitiges Nachregeln der Geschwindigkeit der normalerweise mit der Kaschierwalze (12) synchronisierten Releasewalze (10) den gewünschten Abtaufpunkt (11) zu erreichen.

4. Sichtkaschiervorrichtung nach einem der Ansprüche 1 bis 3, **dadurch gekennzeichnet, dass** die Gegendruckwalze (7) auch die Gegendruckwalze der Abzugswalze (6) bildet.

5. Sichtkaschiervorrichtung nach einem der Ansprüche a bis 4, **gekennzeichnet durch** eine geheizte Breitschlitzdüse 9, **durch** die vorzugsweise am Beginn des Einlaufspalts zwischen der Gegendruckwalze (7) und der Releasewalze (10) auf die über die Gegendruckwalze (7) geführte Kaschierfolie (F) ein thermoplastischer Klebstoff aufgebracht wird.

6. Sichtkaschiervorrichtung nach Anspruch 5, **dadurch gekennzeichnet, daß** die Breitschlitzdüse (9) die Folie (F) im Ablaufradius auf der vorzugsweise gummierten Gegendruckwalze (7) tangiert.

7. Sichtkaschiervorrichtung nach Anspruch 5, **dadurch gekennzeichnet, daß** die Breitschlitzdüse (9) im Abstand von 0 bis 100 mm zur Folie (F) im Ablaufradius auf der vorzugsweise gummierten Gegendruckwalze (7) angeordnet ist und den Klebstoffilm auf die Kaschierfolie (F) auf- bzw. in den Spalt zwischen der Gegendruckwalze (7) und der Releasewalze (10) einfließen läßt (aufextrudiert).

## Claims

1. Visual laminating device, wherein for the purposes of surface finishing of printed and other products, in particular sheets of paper, by means of a preferably heated laminating roller (12), a laminating foil (F) drawn from a supply roller (1) is laminated to the product by its face which is coated with adhesive, **characterised in that** immediately in front of the laminating roller (12) is disposed a foil relaxing device consisting of a counter-pressure roller (7) around which the laminating foil (F) is partially wound from above and a release roller (10), and **in that** the laminating foil (F) wound partially round the release roller (10) from below and adhering thereto with its adhesive layer is released from the release roller at a specifiable run-off point (11) between the lower and upper edge, preferably in the region of the 15 o'clock line and runs without tension on to the laminating roller (12) which is driven substantially synchronously.

2. Visual laminating device according to claim 1, **characterised in that** the release roller (10) is a heatable and/or coolable calendering roller with a surface treatment or surface coating adapted to the adhesive coating of the laminating foil (F).

3. Visual laminating device according to claim 1 or 2, **characterised in that** the release roller (10) is provided with a controllable drive, to which is allocated a sensor (16) for monitoring the foil (F) running off the release roller (10), in order to achieve the desired run-off point (11) by brief re-adjustment of the speed of the release roller (10) which is normally synchronised with the laminating roller (12).

4. Visual laminating device according to one of claims 1 to 3, **characterised in that** the counter-pressure roller (7) also forms the counter-pressure roller of the delivery roller (6).

5. Visual laminating device according to one of claims 1 to 4, **characterised by** a heated wide-slot nozzle (9), through which thermoplastic adhesive is applied to the laminating foil passing over the counter-pressure roller (7) preferably at the start of the inlet slot between the counter-pressure roller (7) and the release roller (10).

6. Visual laminating device according to claim 5, **characterised in that** the wide-slot nozzle (9) touches the foil (F) in the run-off radius on the preferably rubberised counter-pressure roller (7).

7. Visual laminating device according to claim 5, **characterised in that** the wide-slot nozzle (9) is disposed at a distance of 0 to 100 mm from the foil (F) in the run-off radius on the preferably rubberised counter-pressure roller (7) and allows the adhesive film to flow (extrudes) on to the laminating foil (F) on or in the gap between the counter-pressure roller (7) and the release roller (10).

## Revendications

1. Dispositif de masquage visuel dans lequel, dans le but d'améliorer la surface d'articles d'imprimerie et autres objets, en particulier de planches imprimées au moyen d'un cylindre de masquage, de préférence chauffé (12), est déposée, prélevée depuis un cylindre de réserve (1), une feuille de masquage (F) avec son côté recouvert d'une couche d'adhésif sur le produit, **caractérisé en ce que**
directement avant le cylindre de masquage (12) est installé un dispositif de détente de feuile des composant d'un cylindre de contre-pression (7) et d'un cylindre de distribution (10) autour desquels s'enroule partiellement par le haut de la feuille de masquage (F) et **en ce que** la feuille de masquage (F), avec la couche d'adhésif s'enroulant par le bas partielle ment en adhérant sur le cylindre de distribution (10) se déroule et chemine depuis un point prévisible (11) entre les arêtes supérieure et inférieure du cylindre de distribution, de préférence depuis la ligne de 15 heures, et s'enroule sous tension sur le cylindre de masquage (12) entraîné pratiquement en synchronisation.

2. Dispositif de masquage visuel selon la revendication 1, **caractérisé en ce que** le cylindre de distribution (10) consiste en un cylindre de calandrage pouvant être chauffé et/ou refroidi avec un traitement ou revêtement superficiel appliqué par dessus la couche de celle de la feuille de masquage (F).

3. Dispositif de masquage visuel selon la revendication 1 ou 2, **caractérisé en ce que** le cylindre de distribution (10) est équipé d'un dispositif d'entraînement réglable qui comporte un palpeur (16) détectant la feuille (F) en cheminement, en vue d'atteindre le point de détachage souhaité (11) par une rapide réponse régulatrice de la vitesse du cylindre de distribution normalement synchronisé avec le cylindre de masquage (12).

4. Dispositif de masquage visuel selon l'une quelconque des revendications 1 à 3, **caractérisé en ce que** le cylindre de contre-pression (7) constitue également le cylindre de contre-pression du cylindre de départ (6).

5. Dispositif de masquage visuel selon l'une quelconque des revendications 1 à 4, **caractérisé par** une buse à large fente (9) par laquelle est appliqué un adhésif thermoplastique, de préférence au début de la ferte d'entrée entre le cylindre de contre-pression (7) et le cylindre de distribution (10), sur la feuille de masquage amenée sur le cylindre de contre-pression (7).

6. Dispositif de masquage visuel selon la revendication 5, **caractérisé en ce que** la buse à large fente (9) est tangente à la feuille (F) sur son rayon de départ sur le cylindre de contre-pression (7) de préférence caoutchouté.

7. Dispositif de masquage visuel selon la revendication 5, **caractérisé en ce que** la buse à large fente (9) est disposée à une distance de 0 à 100 mm de la feuille (F) sur le rayon de départ sur le cylindre de contre-pression de préférence caoutchouté, et le film adhésif est coulé (extrucé) sur la feuille de masquage (F) sur ou dans la fente entre le cylindre de contre-pression (7) et le cylindre de distribution (10).
